# EUROPEAN PATENT APPLICATION

(11) **EP 4 600 033 A1**
(43) Date of publication of application: **13.08.2025**
(21) Application number: 23874811.5
(22) Date of filing: 02.10.2023
(51) Int. Cl.: B32B 3/12, B29C 43/20, B29C 70/42, B32B 5/26

(54) **SANDWICH PANEL AND PRODUCTION METHOD FOR SANDWICH PANEL**

(30) Priority: 06.10.2022 JP 2022161532
(71) Applicant: Sumitomo Bakelite Co.Ltd., Shinagawa-ku Tokyo 140-0002 (JP)
(72) Inventor: ISOBE, Daisuke, Tokyo 140-0002 (JP); TERASHI, Nobuo, Tokyo 140-0002 (JP); KOIZUMI, Koji, Tokyo 140-0002 (JP)
(74) Representative: Ter Meer Steinmeister & Partner
(86) International application number: PCT/JP2023/035891
(87) International publication number: WO 2024/075684

(57) **Abstract**

There is provided a sandwich panel (100) including a core layer (1) having a honeycomb structure, and a plurality of skin layers (2) provided on both surfaces of the core layer (1), in which the skin layer (2) is obtained by laminating two or more prepregs (21) such that a wet-laid sheet (22) is interposed between the two or more prepregs.

## Description

### TECHNICAL FIELD

The present invention relates to a sandwich panel and a production method for a sandwich panel. More specifically, the present invention relates to a sandwich panel, a production method for a sandwich panel, and a molding material set for a sandwich panel.

### BACKGROUND ART

A sandwich panel includes: a hollow honeycomb core having a cross section that is formed of hexagonal walls; and a pair of skin materials such as prepregs that are bonded to both surfaces of the honeycomb core. A sandwich panel that is light-weight and has high rigidity is used as, for example, a structural member for an aircraft.

As the production method for a sandwich panel, various methods are disclosed. As a general method, for example, a technique described in Patent Document 1 is disclosed. The above-described document discloses, as a secondary adhesion forming process, a method including: laminating prepregs; allowing the laminate to enter a vacuum bag stage; curing a binder resin in the prepregs using an autoclave; bonding the composite prepreg to opposite surfaces of a honeycomb core through a film-shaped adhesive; and pressurizing the laminate at a high temperature to cure the film-shaped adhesive.

### RELATED DOCUMENT

### PATENT DOCUMENT

[Patent Document 1] Japanese Unexamined Patent Publication No. 2020-1268

### SUMMARY OF THE INVENTION

### TECHNICAL PROBLEM

However, such a sandwich panel in the related art as disclosed in Patent Document 1 has room for improvement in terms of further improving mechanical strength.

### SOLUTION TO PROBLEM

As a result of intensive studies to increase the mechanical strength of the sandwich panel, the inventors of the present invention have newly found that it is effective to use newly a wet-laid sheet, whereby the present invention has been completed.

According to the present invention, the following sandwich panel and a technique related sandwich panel are provided.

[1] A sandwich panel including:
   a core layer having a honeycomb structure; and
   a plurality of skin layers which are provided over both surfaces of the core layer,
   in which at least one of the skin layers is obtained by laminating two or more prepregs such that a wet-laid sheet is interposed between the two or more prepregs.
[2] The sandwich panel according to [1], in which the wet-laid sheet contains a thermosetting resin and a reinforced short fiber.
[3] The sandwich panel according to [1] or [2], in which a thickness of the wet-laid sheet is 5 µm or more and 150 µm or less.
[4] The sandwich panel according to any one of [1] to [3], in which a proportion (in terms of % by volume) of the thermosetting resin to a total volume of the wet-laid sheet is 10% by volume or more and 70% by volume or less.
[5] The sandwich panel according to [2] to [4], in which the thermosetting resin of the wet-laid sheet contains one or two or more selected from the group consisting of a phenol resin, an epoxy resin, an unsaturated polyester resin, a melamine resin, and a polyurethane resin.
[6] The sandwich panel according to any one of [2] to [5], in which the fiber filler of the wet-laid sheet contains one or two or more selected from a metal fiber, a carbon fiber, a glass fiber, a ceramic fiber, a polyamide fiber, an aramid fiber, a polyimide fiber, a polyvinyl alcohol fiber, a polyester fiber, an acrylic fiber, a polyparaphenylene benzoxazole fiber, a polyethylene fiber, a polypropylene fiber, a polyacrylonitrile fiber, and an ethylene vinyl alcohol fiber.
[7] The sandwich panel according to any one of [1] to [6], in which the prepreg is formed of a sheet-shaped base material consisting of one or two or more selected from an aramid fiber, a polyester fiber, a polyphenylene sulfide fiber, a carbon fiber, a graphite fiber, a glass fiber, and a silicon carbide fiber.
[8] The sandwich panel according to any one of [1] to [7], in which the prepreg contains, as a binder resin, one or two or more selected from the group consisting of a phenol resin, an epoxy resin, an unsaturated polyester resin, a melamine resin, and a polyurethane resin.
[9] The sandwich panel according to any one of [1] to [8], in which a thickness of the prepreg is 50 µm or more and 500 µm or less.
[10] The sandwich panel according to any one of [1] to [9], in which the core layer is formed of an aramid fiber.
[11] The sandwich panel according to any one of [1] to [10], in which the sandwich panel is used for a panel for an aircraft.
[12] A production method for a sandwich panel including a core layer having a honeycomb structure and a plurality of skin layers which are provided over both surfaces of the core layer, where at least one of the skin layers is obtained by laminating two or more prepregs such that a wet-laid sheet is interposed the two or more prepregs, the production method including:
   a disposition step of disposing each of the skin layers over each of surfaces of the core layer; and
   an integration step of integrating the core layer and the skin layers by a heating and pressurizing treatment.
[13] The production method for a sandwich panel according to [12], in which the integration step is carried out under conditions of 100°C to 200°C and 1 to 20 kgf/m².
[14] The production method for a sandwich panel according to [12] or [13], in which, in the disposition step, each of the skin layers is disposed over the core layer by laminating one prepreg, the wet-laid sheet, and the other prepreg in this order over each of the surfaces of the core layer.
[15] The production method for a sandwich panel according to [12] or [13], further including, before the disposition step:
   a skin layer forming step of laminating one prepreg, the wet-laid sheet, and the other prepreg in this order and integrating the one prepreg, the wet-laid sheet, and the other prepreg by a heating and pressurizing treatment to obtain the skin layer,
   in which, in the disposition step, the skin layer is disposed over each of surfaces of the core layer such that a hot melt-based adhesive is interposed between the skin layer and the core layer.
[16] The production method for a sandwich panel according to [15], in which, in the skin layer forming step, the heating and pressurizing treatment is carried out under conditions of 100°C to 200°C and 10 to 50 kgf/m².
[17] A molding material set for a sandwich panel, including:
   a core layer having a honeycomb structure;
   a plurality of prepregs; and
   a plurality of wet-laid sheets,
   in which a plurality of the prepregs are configured to form a plurality of skin layers by being laminated such that the wet-laid sheet is interposed between the plurality of prepregs, and the skin layers are configured to be provided over both surfaces of the core layer.

### ADVANTAGEOUS EFFECTS OF INVENTION

According to the present invention, it is possible to provide a technique that is capable of improving the mechanical strength of a sandwich panel.

### BRIEF DESCRIPTION OF THE DRAWINGS

Fig. 1 is a schematic cross-sectional view showing a sandwich panel according to the present embodiment.
Fig. 2 is a schematic cross-sectional view showing a first example of a production method for a sandwich panel according to the present embodiment.
Fig. 3 is a schematic cross-sectional view showing a second example of a production method for a sandwich panel according to the present embodiment.

### DESCRIPTION OF EMBODIMENTS

In the present specification, a denotation "a to b" in the description of a numerical value range represents a or more and b or less unless specified otherwise. For example, "1% to 5% by mass" means "1% by mass or more and 5% by mass or less".

Hereinafter, a description will be made for an embodiment of the present invention using the drawings. It is noted that, in all drawings, the same constitutional elements are designated by the same reference numerals, and the description thereof will not be repeated.

### <Sandwich panel>

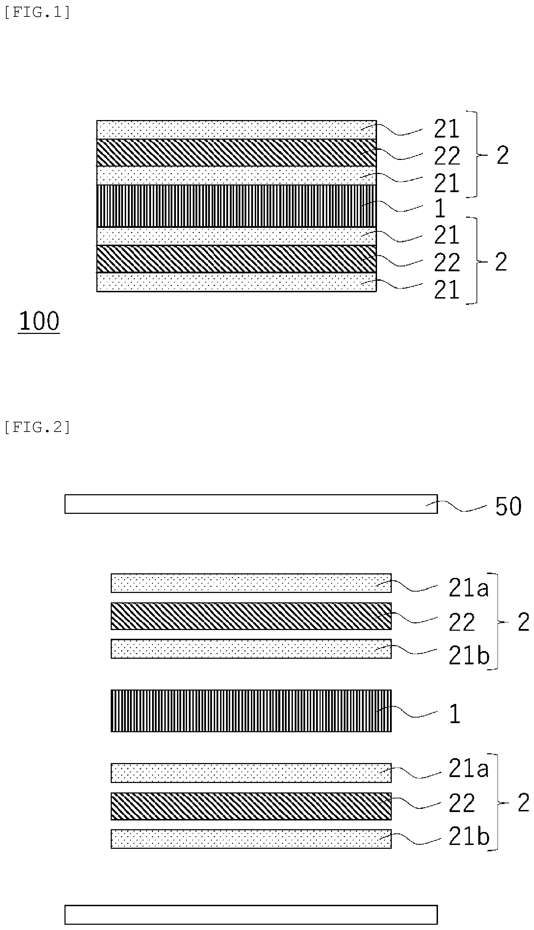

As shown in Fig. 1, a sandwich panel 100 according to the present embodiment includes a core layer 1 having a honeycomb structure and a skin layer 2 which is provided over both surfaces of the core layer. In other words, the skin layer 2 is provided on one surface (upper surface) of the core layer 1, and the skin layer 2 is also provided on the other surface (lower surface). In the present embodiment, an example in which the skin layer 2 is obtained by laminating two prepregs 21 such that a wet-laid sheet 22 is interposed the two or more prepregs will be described; however, the present invention is not limited thereto. For example, the skin layer 2 may be a skin layer obtained by laminating three prepregs 21 such that the wet-laid sheet 22 is interposed the two or more prepregs, or a skin layer obtained by laminating four or more prepregs may be used.

Hereinafter, each configuration of the sandwich panel 100 will be described in detail.

### [Core layer]

The core layer 1 is a sheet-shaped plate member having a structure that has high strength and lightness in weight, and it has a honeycomb structure. The honeycomb structure is a publicly known structure and is intended to indicate a structure in which a plurality of substantially regular hexagonal through holes that penetrate from an upper surface to a lower surface are formed.

Examples of the base material that constitutes the honeycomb structure of the core layer 1 include those obtained by molding aramid fibers, paper, balsawood, plastic, aluminum, titanium, glass, or an alloy thereof into a honeycomb shape using a publicly known method. Among the above, from the viewpoint of heat resistance and weight reduction, it is preferable that the base material that constitutes the honeycomb structure of the core layer 1 includes an aramid fiber.

In the core layer 1, the shape of the base material is preferably a woven fiber cloth. As a result, the processibility into the honeycomb structure can be made favorable, and the weight of the sandwich panel 100 can be improved.

In addition, in a case where the core layer 1 is a fiber cloth, it is suitable to use, for example, a sheet-shaped member for a core layer, which is obtained by impregnating a base material for a core layer having a honeycomb structure with a binder resin. As a result, the high strength and the lightness in weight are further enhanced. The binder resin is not particularly limited, and the same one as the binder resin in the skin layer 2 described later can be used.

The layer thickness of the core layer 1 is not particularly limited and, for example, it may be 1 mm or more and 50 mm or less, may be 3 mm or more and 40 mm or less, or may be 5 mm or more and 30 mm or less.

The size of each of the core cells in the core layer 1 is not particularly limited. However, for example, the length of one side of the core cell may be 1 mm or more and 10 mm or less.

The area of the surface (upper surface, lower surface) of the core layer 1 is not particularly limited. For example, the area may include the surface of one sandwich panel 100 or may include the surface area of a plurality of sandwich panels. As a result, one sandwich panel 100 can be diced into a plurality of panels, which can improve the productivity. For example, the area of the surface (upper surface, lower surface) of the core layer 1 can be made large and, for example, may be 1 m² or more.

In addition, from the viewpoint of improving corrosion resistance or heat resistance, various surface treatments may be performed on the inside and/or the outside of the core layer 1.

### [Skin layer]

The skin layer 2 is a layer that constitutes the outer surface of the sandwich panel 100 and serves as an outermost layer.

The skin layer 2 according to the present embodiment is obtained by laminating two layers of the prepreg 21 such that the wet-laid sheet 22 is interposed the two or more prepregs. More specifically, it is preferable that the skin layer 2 is a skin layer that is obtained by curing a binder resin in the prepreg 21 and firmly adhering the binder resin to the wet-laid sheet 22. That is, in a case where the prepreg 21 contains a binder resin, and a part of the binder resin is infiltrated into the wet-laid sheet 22 and is cured in the manufacturing process of the sandwich panel 100, the adhesiveness at the interface between the prepreg 21 and the wet-laid sheet 22 is improved.

Hereinafter, details of the prepreg 21 and the wet-laid sheet 22, which constitute the skin layer, 2 will be described.

### [Prepreg]

The prepregs 21 are a plurality of prepregs, and one or two of the prepregs 21 among the plurality of prepregs are layers that constitute the outer surface of the skin layer 2 and can serve as an outermost layer.

The prepreg 21 is a prepreg that is obtained by impregnating a sheet-shaped base material with a binder resin.

Examples of the sheet-shaped base material include one or two or more selected from an aramid fiber, a polyester fiber, a polyphenylene sulfide fiber, a carbon fiber, a graphite fiber, a glass fiber, and a silicon carbide fiber. As a result, a difference in linear expansion coefficient between the prepreg 21 and the core layer 1 can be reduced, and thus warpage of the sandwich panel 100 can be suppressed.

Among the above, from the viewpoint of obtaining high heat resistance, it is more preferable to include glass fibers, and from the viewpoint of achieving both mechanical strength and lightness in weight, it is more preferable to include carbon fibers.

Examples of the binder resin include one or two or more selected from the group consisting of a phenol resin, an epoxy resin, an unsaturated polyester resin, a melamine resin, and a polyurethane resin.

The thickness of the prepreg 21 is preferably 50 µm or more and 500 µm or less, and more preferably 50 to 400 µm. It is still more preferably 50 to 300 µm.

### [wet-laid sheet]

The wet-laid sheet 22 according to the present embodiment is used for closely attaching a plurality of the prepregs 21 to each other. The number of the wet-laid sheets 22 is appropriately set according to the number of the prepregs 21.

It is preferable that the wet-laid sheet 22 is a sheet that is obtained by using a wet-laid sheet making method using a thermosetting resin and a reinforced short fiber as materials. That is, the wet-laid sheet 22 is obtained by dispersing reinforced short fibers in an excess solvent and carrying out sheet making to depositing the reinforced short fibers in a layered shape while evenly entangling a large amount of the reinforced short fibers. As a result, it is possible to contain the reinforced short fibers at a high proportion and is also possible to make the dispersibility and the entanglement properties favorable, which makes it possible to significantly improve the mechanical strength.

The proportion (in terms of % by volume) of the thermosetting resin is preferably 10% by volume or more and 70% by volume or less, more preferably 30% by volume or more and 60% by volume or less, and still more preferably 40% by volume or more and 55% by volume or less, with respect to the total volume of the wet-laid sheet 22.

In a case where the proportion of the thermosetting resin is set to be equal to or larger than the above-described lower limit value, the moldability of the wet-laid sheet 22 can be made favorable. On the other hand, in a case where the proportion of the thermosetting resin is set to be equal to or smaller than the above-described upper limit value, it is possible to suppress the excessive interposition of the thermosetting resin at the interface between the wet-laid sheet 22 and the prepreg 21, to maintain favorable adhesiveness between the wet-laid sheet 22 and the prepreg 21, and to increase the proportion of the reinforced short fibers, thereby further improving the mechanical strength.

### (Thermosetting resin)

As the thermosetting resin, a phenol resin, an epoxy resin, a melamine resin, polyurethane, an unsaturated polyester resin, or the like can be used. As the thermosetting resin, one of the above-described specific examples can be used, or two or more thereof may be used in combination. Among the above, a phenol resin or an epoxy resin is preferable as the thermosetting resin.

Specific examples of the phenol resin include a novolac-type phenol resin, a resol-type phenol resin, and an aryl alkylene-type phenol resin. As the phenol resin, one kind thereof among the above-described phenol resins may be used alone, two or more kinds thereof having weight-average molecular weights different from each other may be used in combination, or one kind or two or more kinds thereof and prepolymers thereof may be used in combination. Among the above, it is preferable to use different kinds of phenol resins in combination, and for example, it is more preferable to use a novolac-type phenol resin and a resol-type phenol resin in combination.

Specific examples of the epoxy resin include biphenyl-type epoxy resins; bisphenol-type epoxy resins such as a bisphenol A-type epoxy resin, a bisphenol F-type epoxy resin, a bisphenol AD-type epoxy resin, and a tetramethyl bisphenol F-type epoxy resin; stilbene-type epoxy resins; novolac-type epoxy resins such as a phenol novolac-type epoxy resin and a cresol novolac-type epoxy resin; polyfunctional epoxy resins such as triphenyl-type epoxy resins exemplified as a triphenolmethane-type epoxy resin, an alkyl-modified triphenolmethane-type epoxy resin, or the like; phenol aralkyl-type epoxy resins (biphenyl aralkyl-type epoxy resin) such as a phenol aralkyl-type epoxy resin having a phenylene skeleton, a naphtholaralkyl-type epoxy resin having a phenylene skeleton, a phenol aralkyl-type epoxy resin having a biphenylene skeleton, and a naphtholaralkyl-type epoxy resin having a biphenylene skeleton; naphthol-type epoxy resins such as a dihydroxynaphthalene-type epoxy resin and an epoxy resin obtained by glycidyl-etherification of a dimer of dihydroxynaphthalene; triazine nucleus-containing epoxy resins such as triglycidyl isocyanurate and monoallyl diglycidyl isocyanurate; bridged cyclic hydrocarbon compound-modified phenol-type epoxy resins such as a dicyclopentadiene-modified phenol-type epoxy resin; brominated epoxy resins such as a brominated bisphenol A-type epoxy resin and a brominated phenol novolac-type epoxy resin; and tris(hydroxyphenyl)methane-type epoxy resins. As the epoxy resin, one kind thereof among the above-described epoxy resins may be used alone, or two or more different kinds of epoxy resins may be used in combination.

### (Reinforced short fiber)

Examples of the reinforced short fiber include one or two or more selected from a metal fiber, a carbon fiber, a glass fiber, a ceramic fiber, a polyamide fiber, an aramid fiber, a polyimide fiber, a polyvinyl alcohol fiber, a polyester fiber, an acrylic fiber, a polyparaphenylene benzoxazole fiber, a polyethylene fiber, a polypropylene fiber, a polyacrylonitrile fiber, and an ethylene vinyl alcohol fiber.

Among the above, a metal fiber, a carbon fiber, or a glass fiber is preferable from the viewpoint of obtaining high mechanical strength.

It is preferable that the content of the reinforced short fibers is appropriately adjusted according to the total amount of the content of the reinforced short fibers and the content of any inorganic filler described later.

The total content of the reinforced short fibers and the inorganic filler is preferably 50% to 95% by volume, more preferably 60% to 90% by volume, and still more preferably 70% to 80% by volume with respect to the entire wet-laid sheet 22.

In a case where the total content of the reinforced short fibers and the inorganic filler is to be equal to or larger than the above-described lower limit value, it is possible to maintain the favorable mechanical strength of the entire wet-laid sheet 22. On the other hand, in a case where the total content of the reinforced short fibers and the inorganic filler is to be equal to or smaller than the above-described upper limit value, it is possible to maintain favorable moldability.

The wet-laid sheet 22 according to the present embodiment may further contain other components such as a thermoplastic resin, a pulp fiber, an inorganic filler, and an aggregating agent, according to the intended purpose.

### (Thermoplastic resin)

Examples of the thermoplastic resin according to the present embodiment include an α-olefin-based resin as well as a copolymer using an α-olefin, a polyester resin, and a polystyrene resin.

Examples of the α-olefin-based resin and the copolymer using an α-olefin include polyethylene and polypropylene. Among the above, polyethylene is preferable, and high density polyethylene (HDPE) is more preferable. In a case where the wet-laid sheet 22 contains high density polyethylene (HDPE), it is possible to effectively improve the interlayer fracture toughness of the carbon fiber-reinforced plastic laminate 10.

Examples of the polyester resin include one or two or more selected from a polyethylene terephthalate resin (PET), a polybutylene terephthalate resin (PBT), and a polytrimethylene terephthalate resin (PTT), and the like.

The content of the thermoplastic resin is preferably 0.5 to 15% by volume, more preferably 1 to 10% by volume, and still more preferably 2 to 8% by volume with respect to the entire wet-laid sheet 22.

### (Pulp fiber)

From the viewpoint of improving the handleability in the manufacturing process of the wet-laid sheet 22, the wet-laid sheet 22 according to the present embodiment may contain pulp fibers.

The pulp fiber is not particularly limited, and examples thereof include a pulp-like fiber obtained by fibrillating a cellulose fiber such as linter pulp or wood pulp, a natural fiber such as kenaf, jute, or bamboo, or organic fibers such as a para-type fully aromatic polyamide fiber or a copolymer thereof, an aromatic polyester fiber, a polybenzazole fiber, a meta-type aramid fiber or a copolymer thereof, an acrylic fiber, an acrylonitrile fiber, a polyimide fiber, or a polyamide fiber. As the pulp fiber, one of the above-described specific examples can be used, or two or more thereof may be used in combination.

The content of the pulp fiber is preferably 0.5 to 15% by volume, more preferably 1 to 10% by volume, and still more preferably 2 to 8% by volume with respect to the entire wet-laid sheet 22.

### (Inorganic Filler)

In the present embodiment, the inorganic filler is used to increase mechanical strength.

Examples of the inorganic filler include one or two or more selected from calcium sulfate, barium sulfate, aluminum hydroxide, magnesium hydroxide, aluminum oxide (alumina), crystal or molten silica, surface-treated silica, talc, kaolin, clay, mica, dolomite, wollastonite, a glass fiber, a carbon fiber, a glass bead, zircon, and a molybdenum compound. Among the above, from the viewpoint of easily improving the balance between the mechanical strength and the moldability of the entire wet-laid sheet 22, molten silica is preferable, clay is more preferable, and a mixture thereof may be used.

The inorganic filler may be an inorganic filler that has been subjected to a surface treatment. Examples of the surface treatment include a treatment with a coupling agent such as a silane coupling agent in advance. The surface treatment the aggregation of the inorganic filler can be suppressed, and favorable dispersibility can be obtained.

As the coupling agent, for example, a primary amino silane such as γ-aminopropyl triethoxysilane or γ-aminopropyl trimethoxysilane can be used.

In a case where a coupling agent is used, the content thereof is not particularly limited; however, it is preferably 0.05 to 3 parts by weight and more preferably 0.1 to 2 parts by weight with respect to 100 parts by weight of the inorganic filler.

### (Aggregating agent)

The wet-laid sheet 22 according to the present embodiment may contain, for example, an aggregating agent. As a result, any resin component and reinforced short fibers can be aggregated in a flock shape.

### (Other components)

The wet-laid sheet 22 according to the present embodiment further includes, for example, a wet-laid sheet making agent, an ion exchange agent, an aggregating agent, a conductivity imparting agent, a flame retardant, a flame retardant auxiliary agent, a pigment, a dye, a lubricating agent, a release agent, a compatibilizing agent, a dispersing agent, a crystal nucleating agent, a plasticizer, a heat stabilizer, an antioxidant, a coloration preventing agent, an ultraviolet absorbing agent, a fluidity modifying agent, a foaming agent, an antibacterial agent, a vibration damping agent, an odorant, a sliding modifying agent, and an antistatic agent.

The thickness of the wet-laid sheet 22 according to the present embodiment is preferably 5 µm or more and 150 µm or less, and more preferably 10 µm or more and 100 µm or less.

In a case where the thickness of the wet-laid sheet 22 is set to be equal to or larger than the above-described lower limit value, the adhesiveness between the plurality of prepregs 21 can be enhanced. On the other hand, in a case where the thickness of the wet-laid sheet 22 is set to be equal to or smaller than the above-described upper limit value, interlayer peeling is easily suppressed.

The thickness of the wet-laid sheet 22 is obtained by measuring a plurality of distances from the outer edge of the sheet-shaped base material of one prepreg 21 to the outer edge of the sheet-shaped base material of the other prepreg 21 in a case where a cross section of the sandwich panel 100 is observed, and then calculating an average value thereof.

In addition, the thickness of the wet-laid sheet 22 can be adjusted by the content of the reinforced short fibers contained in the wet-laid sheet 22, and the like.

### [Production method]

The wet-laid sheet 22 according to the present embodiment can be obtained by a publicly known method; however, it can be obtained, for example, by the following method.

First, a slurry is prepared by dispersing fibers such as reinforced short fibers and optional components (excluding aggregating agents) such as the above-described resin component in a dispersion medium. The dispersion medium is not limited, and specific examples thereof include water; alcohols such as ethanol, 1-propanol, 1-butanol, and ethylene glycol; ketones such as acetone, methyl ethyl ketone, 2-heptanone, and cyclohexanone; esters such as ethyl acetate, butyl acetate, methyl acetoacetate, and methyl acetoacetate; and ethers such as tetrahydrofuran, isopropyl ether, dioxane, and furfural.

Next, an aggregating agent is added to the dispersion liquid as necessary to form an aggregate. It is noted that in a case where the reinforced short fibers and the resin component are sufficiently aggregated to form an aggregate, the aggregation step may not be carried out.

Subsequently, the slurry is placed in a container having a mesh on the bottom surface to separate the dispersion medium and the aggregate from each other, and the aggregate is allowed to remain on the mesh to obtain an aggregate having a flat sheet shape. The thickness of the sheet can be adjusted by adjusting the amount of each of the above-described materials in the material slurry or preparing the slurry again and carrying out a separation step.

Thereafter, the dispersion medium is removed by dehydration pressing and drying, and in a case of containing a thermosetting resin, the wet-laid sheet 22 can be made in a B stage state.

The wet-laid sheet 22 in the B stage state is subsequently heated and pressurized together with the prepreg 21 later, thereby being completely cured in a case of containing a thermosetting resin, and as a result, the wet-laid sheet 22 is obtained.

### <Use application of sandwich panel>

The sandwich panel 100 according to the present embodiment is excellent in lightness in weight and mechanical strength, and can be well-balanced with various performances such as heat resistance and fire resistance, and thus it is suitably used for various transport devices. Among the above, it can be suitably used for a panel for an aircraft, which requires high mechanical strength and heat resistance. For example, the sandwich panel 100 can be used as an interior equipment of an aircraft such as a lavatory or a partition or as an equipment in an aircraft such as a wagon chassis.

### <Production method for sandwich panel>

### [First production method]

Next, a first production method for the production method for a sandwich panel according to the present embodiment will be described.

As shown in Fig. 2, the first production method is a method of collectively integrating the core layer 1, the prepreg 21, and the wet-laid sheet 22. Specifically, the first production method includes;
a step of disposing each of the skin layers 2 by laminating a prepreg 21a, the wet-laid sheet 22, and a prepreg 21b in this order on each of the surfaces of the core layer 1, that is, on the lower surface of the core layer 1, and laminating the prepreg 21b, the wet-laid sheet 22, and the prepreg 21a in this order on the upper surface of the core layer 1, and
an integration step of integrating the core layer 1 and the skin layer 2 (the prepreg 21a, the wet-laid sheet 22, and the prepreg 21b) by a heating and pressurizing treatment.

Hereinafter, details of each of the steps will be described.

First, the skin layer 2 is disposed by laminating the prepreg 21a, the wet-laid sheet 22, and the prepreg 21b in this order on each of the surfaces of the core layer 1. Specifically, as shown in Fig. 2, a prepreg 21a, the wet-laid sheet 22, and a prepreg 21b are laminated in this order on the lower surface of the core layer 1, and laminating the prepreg 21b, the wet-laid sheet 22, and the prepreg 21a in this order on the upper surface of the core layer 1, and the skin layer 2 is formed on each of the upper and lower surfaces of the core layer 1.

In this case, in a case where the core layer 1 contains a thermosetting resin as a binder resin, the thermosetting resin may be in a B stage state before being cured; however, typically, a thermosetting resin after being cured is used. In addition, in a case where the prepreg 21 and the wet-laid sheet 22 contain a thermosetting resin as a binder resin, it is preferable that both the prepreg 21 and the wet-laid sheet 22 are in the B stage state before being cured, and it is more preferable that at least the binder of the prepreg 21 is in the B stage state. As a result, the core layer 1, the prepreg 21, and the wet-laid sheet 22 can be firmly integrated with each other by a subsequent heating and pressurizing treatment.

The prepreg 21a and the prepreg 21b are substantially the same.

Next, the integration is carried out by a heating and pressurizing treatment. As shown in Fig. 2, the heating and pressurizing treatment is carried out by using, for example, a flat pressing plate 50 so that the skin layer 2 disposed on the outermost surface is sandwiched in the up-down direction. In addition, in this case, a release film may be used between the skin layer 2 and the pressing plate 50. As a result, the surface of the skin layer 2 can be made smooth, and the pressing plate 50 and the skin layer 2 can be easily peeled off after heating.

The heating treatment in the first production method is carried out at preferably 100°C to 200°C and more preferably 120°C to 150°C, and the pressurization treatment is carried out at preferably 1 to 20 kgf/m² and more preferably 5 to 15 kgf/m².

In a case where the temperature and the pressure of the heating and pressurizing treatment are set to be equal to or larger than the above-described lower limit values, the core layer 1 and the skin layer 2 can be firmly integrated. On the other hand, in a case where the temperature and the pressure of the heating and pressurizing treatment are set to be equal to or smaller larger than the above-described upper limit values, the integrated can be suitably carried out while suppressing the damage to the skin layer 2 and the like.

In addition, the heating and pressurization time is appropriately adjusted according to the temperature and the pressure; however, it is, for example, preferably set to 30 to 90 minutes.

The heating and pressurizing treatment can be carried out in the atmospheric air without requiring gas replacement or the like. Therefore, the productivity can be improved.

As the pressing plate 50, a publicly known plate can be used, and examples thereof include a metal plate such as a SUS plate, a tinned plate, an aluminum plate, or a magnesium plate.

In addition, the thickness of the pressing plate 50 is not particularly limited and, for example, may be 0.5 mm or more and 10 mm or less, may be 0.8 mm or more and 5 mm or less, or may be 1.0 mm or more and 2.0 mm or less. In a case of being set to be in the above-described range, a balance between rigidity and thermal conductivity can be achieved.

According to the above-described procedure, the sandwich panel 100 is obtained.

### [Second production method]

Next, a second production method for the production method for a sandwich panel according to the present embodiment will be described.

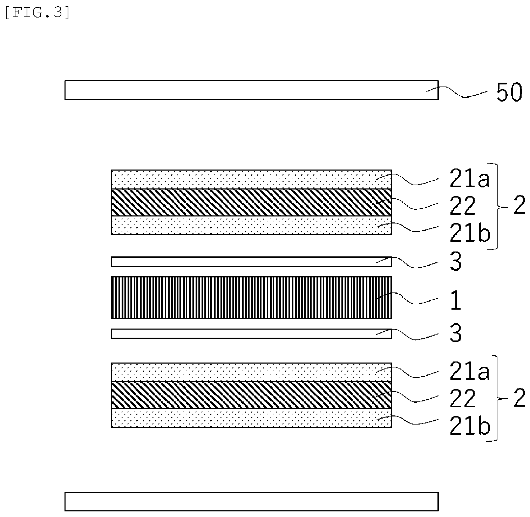

As shown in Fig. 3, the second production method is a method including a skin layer forming step of laminating in advance the prepreg 21a, the wet-laid sheet 22, and the prepreg 21b in this order and integrating the one prepreg 21a, the wet-laid sheet 22, and the other prepreg 21b by a heating and pressurizing treatment to obtain the skin layer 2, in which the core layer 1 and the skin layer 2 are integrated with a hot melt-based adhesive 3.

Hereinafter, points different from the first production method will be described.

In the skin layer forming step, the prepreg 21a, the wet-laid sheet 22, and the prepreg 21b are laminated in this order and integrated by a heating and pressurizing treatment. In this case, in a case where the prepreg 21 and the wet-laid sheet 22 contain a thermosetting resin as a binder resin, it is preferable that both the prepreg 21 and the wet-laid sheet 22 are in the B stage state before being cured. As a result, the prepreg 21 and the wet-laid sheet 22 can be firmly integrated with each other by a subsequent heating and pressurizing treatment.

The heating treatment in the second production method is carried out at preferably 100°C to 200°C and more preferably 120°C to 150°C, and the pressurization treatment is carried out at preferably 10 to 50 kgf/m² and more preferably 20 to 45 kgf/m².

In a case where the temperature and the pressure of the heating and pressurizing treatment are set to be equal to or larger than the above-described lower limit values, the prepreg 21 and the wet-laid sheet 22 can be firmly integrated. On the other hand, in a case where the temperature and the pressure of the heating and pressurizing treatment are set to be equal to or smaller larger than the above-described upper limit values, the integrated can be suitably carried out while suppressing the damage to the prepreg 21 and the like.

In addition, the heating and pressurization time is appropriately adjusted according to the temperature and the pressure; however, it is, for example, preferably set to 30 to 90 minutes.

Next, the obtained skin layer 2 is disposed on both surfaces of the core layer 1 so that the hot melt-based adhesive 3 is interposed between the skin layer 2 and the core layer.

The hot melt adhesive 3 includes, as a main component, a non-curable resin that is flowable at a high temperature and returns to a non-flowable state by cooling. That is, it melts and exhibits adhesiveness at a specific temperature or higher.

Examples of the non-curable resin include one kind or more or two kinds or more selected from the group consisting of a polyurethane-base resin, an acrylonitrile-base resin, a diene-base resin, an acrylic-base resin, a butadiene-base resin, a polyamide-base resin, a polyvinyl butyral-base resin, an olefin-base resin, an isoprene-base resin, a butadiene-base resin, a chloroprene-base resin, an acrylonitrile-base resin, a polyester-base resin, a polyvinyl chloride-base resin, a styrene-base resin, an ethylene-vinyl acetate-base resin, a fluorine-base resin, a silicone-base resin, a thermoplastic resin including a copolymer of these resins. Among the above, it is more preferable that the hot melt adhesive includes polyamide as a main component.

In addition, the shape of the hot melt-based adhesive 3 is not particularly limited and, from the viewpoint of effectively suppressing the formation of voids, is preferably non-woven fabric-shaped or film-shaped.

Thereafter, in the same manner as in the first production method, the heating and pressurizing treatment is carried out using the pressing plate 50 or the like to integrate the core layer 1 and the skin layer 2, whereby the sandwich panel 100 is obtained.

### <Molding material set for sandwich panel>

A molding material set for a sandwich panel according to the present embodiment is a set including a core layer 1 having a honeycomb structure, a plurality of prepregs 21, and a plurality of wet-laid sheets 22.

That is, a plurality of the prepregs 21 are configured to form a plurality of skin layers 2 by being laminated such that the wet-laid sheet 22 is interposed between the plurality of the prepregs 21, and the skin layer 2 is configured to be provided on both surfaces of the core layer 1. By using the set of these molding materials, the above-described sandwich panel 100 can be produced. Among the above, the sandwich panel 100 can be easily produced by using the first production method.

Hereinabove, the embodiments of the present invention have been described with reference to the drawings. However, the embodiment is merely an example of the present invention, and various configurations other than the above-described configurations can also be adopted.

### Examples

A detailed description will be given of the present invention below with reference to Examples; however, the present invention is not limited by the description of these Examples.

### (1) Preparation of wet-laid sheet

A wet-laid sheet was produced using the following raw materials.

### (Raw material)

· Reinforced short fiber: Carbon fiber, "T800SC", manufactured by Toray Industries, Inc., fiber length: 6 mm
· Thermosetting resin 1: Resol-type phenol resin, PR-51723, manufactured by Sumitomo Bakelite Co., Ltd.
   (A) Thermosetting resin 2: Novolac-type phenol resin, A-1087, (manufactured by Sumitomo Bakelite Co., Ltd.
· Pulp fiber: "Twaron (registered trademark) 1094", manufactured by TEIJIN LIMITED
· High density polyethylene: "SWP E400", manufactured by Mitsui Chemicals, Inc.

First, the thermosetting resin 1 and the thermosetting resin 2 were mixed with each other by a mixer so that the content of the thermosetting resin 1 was 70% by mass and the content of the thermosetting resin 2 was 30% by mass, and then the obtained mixture was kneaded with a biaxial roll at 80°C for 5 minutes, cooled, and crushed to obtain a mixed resin having an average particle diameter of 50 µm.

Next, 40% by volume of the reinforced short fibers, 50% by volume of the obtained mixed resin, 5% by volume of the pulp fibers, and 5% by volume of the high density polyethylene were added to water as a dispersion medium, and the resultant mixture was stirred for 20 minutes to obtain a slurry having a concentration of solid contents of 0.15% by weight.

A poly(meth)acrylic acid ester emulsion (manufactured by HYMO CORPORATION, "Himoloc DR-9300") prepared in advance was added to the obtained slurry so that the content thereof was 300 ppm with respect to the solid content in the slurry, and the solid content in the slurry was aggregated.

Next, the slurry containing the aggregate was filtered through a 30-mesh metal mesh (screen), and the sheet-shaped aggregate remaining on the screen was pressed at a pressure of 3 MPa and dehydrated so that the dehydration rate was 20%. The dehydrated aggregate was dried at 70°C for 3 hours to obtain a wet-laid sheet (thickness: 1 mm) in a B stage state.

It is noted that the dehydration rate was defined as the mass of water contained in the wet-laid sheet after dehydration in a case where the mass of water contained in the wet-laid sheet (sheet-shaped aggregate) before dehydration was set to 100%.

### (2) Molding material set for sandwich panel

The following molding material set for a sandwich panel was prepared.

### (Molding material set)

· Core layer: Aramid fiber, thickness: 10 mm, HRH-10-1/8-3.0 (manufactured by HEXCEL Corporation), area: 1 m × 3 m
· wet-laid sheet: A wet-laid sheet prepared in (1) described above was used.
· Prepreg: A sheet-shaped prepreg (thickness: 250 µm) obtained by impregnating glass fibers (#7781, manufactured by HEXCEL Corporation) with a phenol resin (resol-type phenol resin, "34370", manufactured by Durez Corporation) was used. The prepreg was in a B stage state.

### (3) Preparation of sandwich panel

### <Example 1>

The prepreg, the wet-laid sheet, and the prepreg were disposed in this order on each of the surfaces of the core layer, SUS plates (thickness: 1.5 mm, Rz: 1.0 µm) were pressed from the upper and lower surfaces, heating and pressurization were carried out using a mechanical press at 0.7 MPa and 127°C for 60 minutes to cure the prepreg to form a skin layer, and the core layer and the skin layer were integrated. Thereafter, the SUS plates on the upper and lower surfaces were separated to obtain a sandwich panel in which the skin layer, the core layer, and the skin layer were laminated in this order.

### <Reference Example 1>

A laminate of two sheets of the prepreg were laminated were disposed on each of the surfaces of the core layer, a SUS plate (thickness: 1.5 mm, Rz: 1.0 µm) was pressed from the upper and lower surfaces, heating and pressurization were carried out using a mechanical press at 0.7 MPa and 127°C for 60 minutes to cure the prepreg to form a skin layer, and the core layer and the skin layer were integrated. Thereafter, the SUS plates on the upper and lower surfaces were separated to obtain a sandwich panel in which the skin layer, the core layer, and the skin layer were laminated in this order.

### <Example 2>

The prepreg, the wet-laid sheet, and the prepreg were disposed in this order, a SUS plate (thickness: 1.5 mm, Rz: 1.0 µm) was pressed from the upper and lower surfaces, and a heating and pressurizing treatment was carried out using a mechanical press at 2.0 MPa and 137°C for 60 minutes to carry out integration, thereby obtaining a skin layer.

Next, the obtained skin layers were respectively disposed on both surfaces of the core layer such that a hot melt-based adhesive (main component: polyamide) was interposed between the core layer and the skin layer, a SUS plate (thickness: 1.5 mm, Rz: 1.0 µm) was pressed from the upper and lower surfaces, and a heating and pressurizing treatment was carried out using a mechanical press at 0.7 MPa and 127°C for 60 minutes to carry out collective lamination, thereby obtaining a sandwich panel.

### <Reference Example 2>

A SUS plate (thickness: 1.5 mm, Rz: 1.0 µm) was pressed from the upper and lower surfaces of the laminate of two sheets of the prepreg, and a heating and pressurizing treatment was carried out using a mechanical press at 2.0 MPa and 137°C for 60 minutes.

Next, the cured prepregs were respectively disposed on both surfaces of the core layer such that a hot melt-based adhesive (main component: polyamide) was interposed between the core layer and the skin layer, a SUS plate (thickness: 1.5 mm, Rz: 1.0 µm) was pressed from the upper and lower surfaces, and a heating and pressurizing treatment was carried out using a mechanical press at 0.7 MPa and 127°C for 60 minutes to carry out collective lamination, thereby obtaining a sandwich panel.

### (4) Measurement

The following measurements were carried out using each of the obtained sandwich panels. The results are shown in Table 1.
· Bending strength: The bending strength was measured according to ASTM-D7249.
· Peel strength: The peel strength between the core layer and the skin layer was measured according to ASTM-D1781.

### [Table 1]

**Table 1**

| | Bending strength | Peel strength |
|---|---|---|
| | [MPa] | [N/25 m] |
| Reference Example 1 | 141 | 47.8 |
| Example 1 | 188 | 56.7 |
| Reference Example 2 | 178 | 80.3 |
| Example 2 | 201 | 84.2 |

This application claims priority on the basis of Patent Application No. 2022-161532 filed on October 6, 2022, the entire disclosure of which is incorporated herein by reference.

### REFERENCE SIGNS LIST

1 core layer
2 skin layer
21 prepreg
21a prepreg
21b prepreg
22 wet-laid sheet
100 sandwich panel

## Claims

1. A sandwich panel comprising:
a core layer having a honeycomb structure; and
a plurality of skin layers which are provided over both surfaces of the core layer,
wherein at least one of the skin layers is obtained by laminating two or more prepregs such that a wet-laid sheet is interposed between the two or more prepregs.

2. The sandwich panel according to Claim 1,
wherein the wet-laid sheet contains a thermosetting resin and a reinforced short fiber.

3. The sandwich panel according to Claim 1,
wherein a thickness of the wet-laid sheet is 5 µm or more and 150 µm or less.

4. The sandwich panel according to Claim **2,**
wherein a proportion (in terms of % by volume) of the thermosetting resin to a total volume of the wet-laid sheet is 10% by volume or more and 70% by volume or less.

5. The sandwich panel according to Claim 2 or 4,
wherein the thermosetting resin of the wet-laid sheet contains one or two or more selected from the group consisting of a phenol resin, an epoxy resin, an unsaturated polyester resin, a melamine resin, and a polyurethane resin.

6. The sandwich panel according to Claim 2 or 4,
wherein the fiber filler of the wet-laid sheet contains one or two or more selected from a metal fiber, a carbon fiber, a glass fiber, a ceramic fiber, a polyamide fiber, an aramid fiber, a polyimide fiber, a polyvinyl alcohol fiber, a polyester fiber, an acrylic fiber, a polyparaphenylene benzoxazole fiber, a polyethylene fiber, a polypropylene fiber, a polyacrylonitrile fiber, and an ethylene vinyl alcohol fiber.

7. The sandwich panel according to Claim 1 or 2,
wherein the prepreg is formed of a sheet-shaped base material consisting of one or two or more selected from an aramid fiber, a polyester fiber, a polyphenylene sulfide fiber, a carbon fiber, a graphite fiber, a glass fiber, and a silicon carbide fiber.

8. The sandwich panel according to Claim 1 or 2,
wherein the prepreg contains, as a binder resin, one or two or more selected from the group consisting of a phenol resin, an epoxy resin, an unsaturated polyester resin, a melamine resin, and a polyurethane resin.

9. The sandwich panel according to Claim 2 or **3,**
wherein a thickness of the prepreg is 50 µm or more and 500 µm or less.

10. The sandwich panel according to Claim 1 or **2,**
wherein the core layer is formed of an aramid fiber.

11. The sandwich panel according to Claim 1 or **2,**
wherein the sandwich panel is used for a panel for an aircraft.

12. A production method for a sandwich panel including a core layer having a honeycomb structure and a plurality of skin layers which are provided over both surfaces of the core layer, where at least one of the skin layers is obtained by laminating two or more prepregs such that a wet-laid sheet is interposed the two or more prepregs, the production method comprising:
a disposition step of disposing each of the skin layers over each of surfaces of the core layer; and
an integration step of integrating the core layer and the skin layers by a heating and pressurizing treatment.

13. The production method for a sandwich panel according to Claim 12,
wherein the integration step is carried out under conditions of 100°C to 200°C and 1 to 20 kgf/m².

14. The production method for a sandwich panel according to Claim 12 or 13,
wherein, in the disposition step, each of the skin layers is disposed over the core layer by laminating one prepreg, the wet-laid sheet, and the other prepreg in this order over each of the surfaces of the core layer.

15. The production method for a sandwich panel according to Claim 12 or 13, further comprising, before the disposition step:
a skin layer forming step of laminating one prepreg, the wet-laid sheet, and the other prepreg in this order and integrating the one prepreg, the wet-laid sheet, and the other prepreg by a heating and pressurizing treatment to obtain the skin layer,
wherein, in the disposition step, the skin layer is disposed over each of surfaces of the core layer such that a hot melt-based adhesive is interposed between the skin layer and the core layer.

16. The production method for a sandwich panel according to Claim 15,
wherein, in the skin layer forming step, the heating and pressurizing treatment is carried out under conditions of 100°C to 200°C and 10 to 50 kgf/m².

17. A molding material set for a sandwich panel, comprising:
a core layer having a honeycomb structure;
a plurality of prepregs; and
a plurality of wet-laid sheets,
wherein the plurality of the prepregs are configured to form the plurality of skin layers by being laminated such that the wet-laid sheet is interposed between the plurality of prepregs, and the skin layers are configured to be provided over both surfaces of the core layer.
